Europäisches Patentamt

European Patent Office

Office européen des brevets

(11) Publication number: **0 473 913 A2**

# EUROPEAN PATENT APPLICATION

(21) Application number: **91111894.1**

(22) Date of filing: **17.07.91**

(51) Int. Cl.⁵: **G06F 9/46**

(30) Priority: **04.09.90 US 576583**

(43) Date of publication of application:
**11.03.92 Bulletin 92/11**

(84) Designated Contracting States:
**DE FR GB**

(71) Applicant: **International Business Machines Corporation**
**Old Orchard Road**
**Armonk, N.Y. 10504(US)**

(72) Inventor: **Farrell, Joel Alan**
**395A Cafferty Hill Road**
**Endicott, New York 13760(US)**

(74) Representative: **Jost, Ottokarl, Dipl.-Ing.**
**IBM Deutschland GmbH Patentwesen und Urheberrecht Schönaicher Strasse 220**
**W-7030 Böblingen(DE)**

(54) **Method and apparatus for providing a service pool of virtual machines for a plurality of VM users.**

(57) A system for providing a service pool of virtual machines (12 - 18) to a plurality of system virtual machine users (20). A host processor (10) creates through a control program (CP) a pool of virtual machines. A firmware configured AVS gateway is connected over an SNA to a plurality of work stations (20). A request from a work station is assigned to one of the service pool machines based on the specific transaction being completed. The ID of the requesting work station is assigned to the selected virtual machine. The assigned virtual machine completes its transaction with the work station and is then free to service other requests.

FIG. I

The present invention relates to the enhancement of virtual machine system product operating systems. Specifically, a pool of virtual machines are provided, each machine pre-initialized for a given application such that a plurality of independent work stations may access the individualized virtual machine, depending on the application requirements of the independent work station.

In normal virtual machine system products, a single independent work station is assigned a specific virtual machine. Virtual machines are created by a control program (CP), operating in a large scale computer processing system. The control program divides the processing operations among a plurality of users, such that each user, connected through an independent work station, appears to have his own processor or virtual machine. Each independent work station has a user ID which is assigned to the virtual machine to run any particular application needed by the independent work station. Each work station has access to only one virtual machine for a given user ID.

The disadvantage of the current arrangements of independent work stations for use in a virtual machine environment relates to the fact that each work station ID is assigned to a particular virtual machine. To initiate any concurrent work by the processor forming the virtual machines, the user must have access to more than one virtual machine. However, the virtual machines have different user IDs and corresponding differences in user authorization. Therefore, for a specific individual work station to run two jobs concurrently, two virtual machines would have to be authorized with two different identification numbers. Alternatively, two separate applications could be concurrently executed in one virtual machine using multitasking. However, multitasking is not easy to implement and is certainly more expensive than is probably warranted in terms of consumption of processor time.

Thus, the foregoing limitations render it inefficient to execute different types of applications from the same work station. This imposes a certain inflexibility on the use of virtual machines.

It is an object of this invention to permit a plurality of independent work stations to use more than one virtual machine for executing different application programs.

It is a specific object of this invention to provide for a pool of service machines, a number of such service machines being pre-initialized to handle a specific application from any independent work station.

It is yet another object of this invention to provide a gateway between a processor supporting a plurality of VM machines, and each of a plurality of independent work stations which permits the assignment of one of the service pool virtual machines to a requesting independent work station.

These and other objects of the invention are provided by a system which permits a plurality of independent work stations to access more than one virtual machine. The independent work stations are connected over a SNA via a VTAM interface, in a preferred embodiment, to the processing system supporting the virtual machines. A pool of such virtual machines is set up in the processor by the system administrator. Each of the virtual machines constituting the pool may be pre-initialized to run a specific program for any connected independent work station.

In carrying out the invention of permitting more than one independent work station to access one of the pre-initialized virtual machines, an AVS gateway is configured in the virtual machine which will select one of the virtual machines for assignment to a requesting independent work station. The assignment process requires that an alternate identification number be assigned to a virtual machine, corresponding to a requesting independent work station identification number. Once the assignment is made, a communication session may be set up by the gateway and a related conversation management routine, between the newly-assigned virtual machine and a connected independent work station.

Since the AVS gateway has the ability to assign a pre-initialized virtual machine to a requesting independent work station, more than one independent work station may access the virtual machine. Each time a new independent work station requests access to a machine for executing a specific application, the AVS gateway will make a new assignment of an alternate identification number to the pre-initialized virtual machine, corresponding to the identification number of the subsequently requesting independent work station.

Description of the Figures

Fig. 1    illustrates a virtual machine complex 9 having associated therewith an administrator 19 and a plurality of independent work stations 20.

Fig. 2    illustrates the configuration by the administrator of the virtual machine complex 9.

Fig. 3    illustrates the sequence of events for establishing a communication between an independent work station and a service pool of virtual machines.

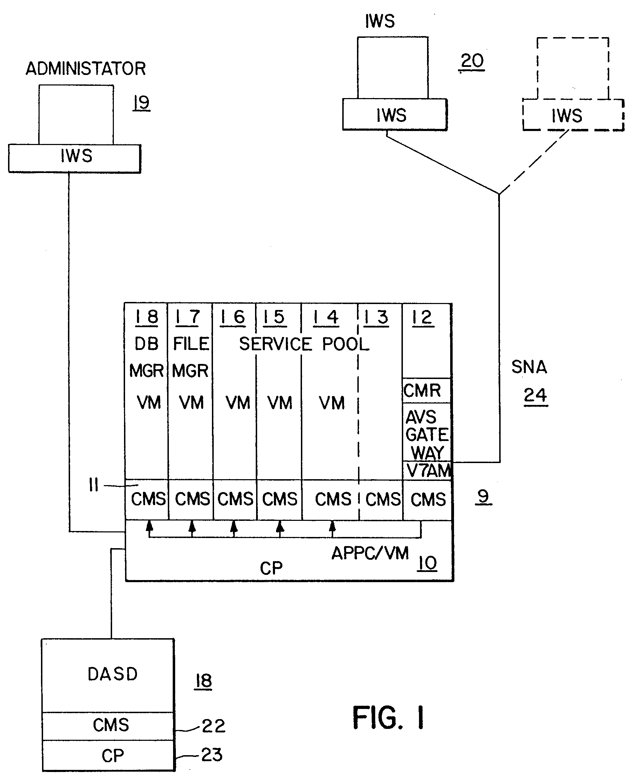

Referring now to Fig. 1, there is shown a virtual machine complex 9. The virtual machine complex 9 comprises a central processor having a control program 10, which partitions the processor into a plurality of virtual machines. Associated with each of the virtual machines 12-17 is a CMS protocol layer, comprising an operating program for permitting each of the partitioned virtual machines 13-18 to communicate with an associated administrator 19 or independent work station 20.

A direct access storage device (DASD) 18 is shown which provides storage for the control program 10 data and parameters, as well as for the CMS data and parameters. As is described in the various references relating to IBM VM/SP installations, the DASD 18 is partitioned to have the respective CP storage area 23 and CMS storage area 22.

The plurality of virtual machines 12-18 may be accessed by different users through an independent work station 20. Shown in Fig. 1 is a virtual machine 12 which is configured to operate as an interface between an SNA 24, connected to the independent work station 20, and the remaining virtual machines in the complex 9. The virtual machine 12 is configured to have an AVS gateway supporting a VTAM Lu.6 protocol for the SNA 24. A conversation management routine associated with the AVS gateway will provide for an APPC/VM communication between the AVS gateway in each of the virtual machines 13 through 18. Thus, any independent work station 20 connected through SNA 24 may communicate via the gateway and associated CMR program to the remaining virtual machines 13-18.

In accordance with the invention, a plurality of the virtual machines 14-16 are shown forming a service pool of virtual machines. Any one of the service pool virtual machines may be selected by the CMR to service a given application request. The pool of virtual machines 14, 15 and 16 may be advantageously pre-initialized with an operating program, dedicated to a specific application. For instance, the virtual machine 14 may be configured to serve as an electronic mail machine, wherein independent work stations may inquire and leave messages in the virtual machine 14 for other users.

The virtual machine 15 may be used for a different function, such as backup/restore, so that it may be pre-initialized with the appropriate application program. As a further example, virtual machine 16 may be programmed with a statistical application such that any of the connected independent work stations 20 may access the service pool and be assigned a virtual machine, pre-initialized for an application which is of interest to an independent work station 20. Additionally shown are virtual machines 17 and 18 which are data base managers and file managers for the DASD 18. These virtual machines 17 and 18 include an access identity table permitting a particular virtual machine access to their files and data base, respectively, when a match is found between the table identities and a requesting work station.

The service pool of virtual machines 14, 15 and 16 are created by the administrator 19. As is described in various IBM reference materials on virtual machine system products, a virtual machine can be created upon a command issued by the administrator 19. In order to create a plurality of such machines, constituting a pool, instead of configuring each virtual machine by the usual user configuration and authorization statements, for each virtual machine being created, a pool statement may be issued by the administrator which comprises the following elements:

User

User ID 1
Configuration Statements
Authorization Statements

Pool Serve 15

Configuration Statements
Configuration Statements
The CP director, used by the system administrator, will expand the foregoing statement to create a plurality of virtual machines equal in number, and having access to the particular system facilities and devices defined in the authorization statements and configuration statements.

Having created the service pool, each of the virtual machines of the service pool will have a primary identity. As will be seen with respect to the allocation of a virtual machine in a service pool to a request from an independent work station 20, each of these virtual machines may be known by an alternate identity matching the identity of the independent work station having a request for service. Each of the service pool machines, like other virtual machines, can communicate through APPC/VM to each other, as well as through the APPC/VTAM interface running in virtual machine 12 to the independent work stations.

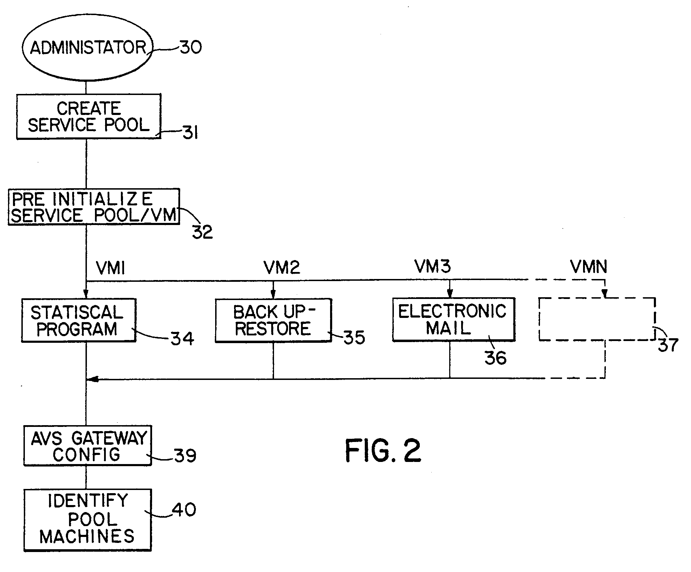

The administrator 19 is responsible for creating the service pool, as well as pre-initializing the service pool virtual machines with specific application programs. Referring to Fig. 2, the general steps shown to create the service pool and prepare the virtual machine complex 9 for servicing ALLOCATE commands received over the SNA 24 are shown. The service pool is created in step 31 using the foregoing command to the administrator file directory. The administrator 19 is connected through the virtual machine 13 to set up the commands for the control program to configure the required number of service pool virtual machines.

Each of the virtual machines is configured in step 32 with specific program packages illustrated in steps 34 through 37. By pre-initializing the virtual machines, it is possible to reduce the amount of time necessary to run an application with the pre-initialized virtual machine. Additionally, the AVS gateway is configured in step 39 to recognize ALLOCATE commands received over the SNA 24, and permit assignment of one of the virtual machines of a pool 14 through 16 to be assigned to execute the received command.

Associated with this gateway configuration is a requirement to supply the identity of the pool machine to a CMR portion of the AVS gateway program, so that the CMR can make an assignment of pool machine to a requesting independent work station 20.

In carrying out the invention of providing a pool of virtual machines capable of servicing a greater number of independent work stations 20, a provision is made for the CMR to assign an alternate ID to each virtual machine of the service pool 14 through 16, corresponding to the ID of the independent work station 20 issuing the ALLOCATE. Each time an ALLOCATE is received by the AVS gateway, the CMR selects a machine and returns the user ID for the connection to the AVS gateway, as well as the alternate user ID, to be used by the virtual machine during the connection. The AVS gateway issues an APPC/VM CONNECT, in step 47, to the selected virtual machine in the service pool, also specifying the alternate user ID for the virtual machine. A communication routine running in the selected virtual machine of the service pool virtual machine 14 through 16 issues an ACCEPT, at which time the alternate user ID is assigned to the machine.

The result is a session between the selected virtual machine, identified by the alternate user ID and the independent work station 20 having the same user ID number. Thus, the independent work station 20 has the ability to access any of the service pool machines 14 through 16 which may be advantageously pre-initialized with a specific application.

It can therefore be seen that this facility of assigning a machine to a given independent work station 20 issuing an ALLOCATE, permits a greater number of work stations to access the specific machine which may have associated therewith a special application program.

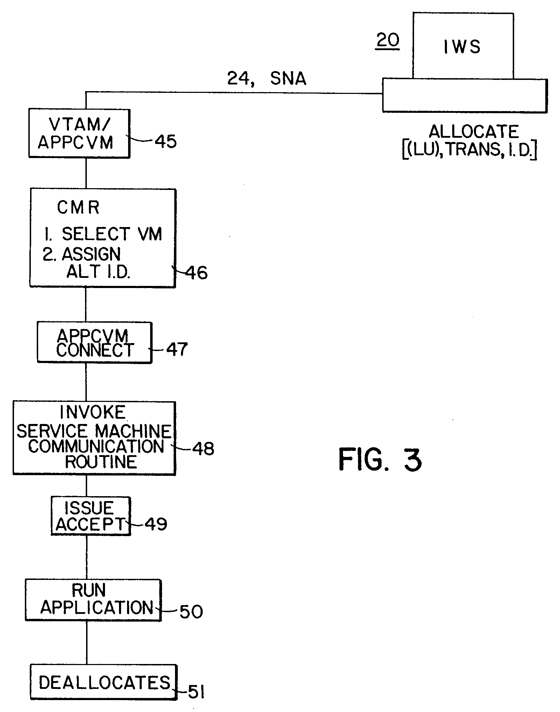

As shown in Fig. 3, the ALLOCATE command issued by the independent work station includes a logic unit identifier, identifying the logical unit set up by the AVS gateway/VTAM interface. The defined logical unit accompanies every ALLOCATE from every independent work station to permit the ALLOCATE to be processed by the AVS gateway. Additionally, the ALLOCATE command provides a transaction identifier which will permit the CMR to select a virtual machine from the service pool of virtual machines 14 through 16, specific to the intended transaction. The user ID identifies independent work station 20, and becomes the alternate identification number for each virtual machine in the service pool 14 through 16.

When an application has been run in response to the allocate command, the IWS deallocates the conversation in step 51 with a CONFIRM LEVEL DEALLOCATE. When the gateway processes the CONFIRM LEVEL DEALLOCATE, the service pool transaction program is notified that the conversation is ending. It performs a cleanup and issues a confirmed back to the independent work station 20. The conversation is then deallocated, at which time the alternate user ID is cleared from the selected service pool virtual pool 14 through 16.

This therefore results in the AVS driving deallocate exit for the gateway and the conversation management routine CMR marks the service pool machine as available for assignment when a subsequent ALLOCATE is received over the SNA 24.

Each of the service pool machines 14, 15 and 16 is also accessible by the system administrator 19 by its primary identification number. The use of the alternate user ID is an expedient for permitting more than one independent work station 20 to be assigned a virtual machine at different times.

Thus, there is described with respect to one embodiment, a complex of virtual machines organized as a service pool. The service pool may be freely assigned to any of a number of authorized independent work stations 20 upon receipt of an ALLOCATE command requesting a desired service.

**Claims**

1. A system for providing a service pool of virtual machines to a plurality of system users comprising:

   a set of independent work stations connected to an SNA;

   a host processor having a control program for sharing resources of said processor by creating a plurality of virtual machines comprising a service pool of virtual machines; and,

   a firmware configured AVS gateway in said host processor, said gateway connected to said SNA, establishing a communication through a VTAM session with one of said work stations initiating a request for service of a virtual machine, and for establishing an APPC/VM communication with an available VM machine of said pool of virtual machines.

2.  The system of claim 1 wherein each of said virtual machines of said pool of virtual machines are initialized to perform a specific set of services, whereby processing speed is enhanced.

3.  The system according to claim 1, wherein said gateway supports VTAM LV.6 communications over said SNA.

4.  The system of claim 1, wherein said AVS forms a logical unit LU having a conversational management program associated with it which selects a virtual machine for connection to one of said independent work stations, and assigns to said selected virtual machine a user ID associated with said work station as an alternate ID for said virtual machine.

5.  The system of claim 4, wherein said conversational management program deletes said assignment of said alternate user ID from said one virtual machine following completion of a session with said work station.

6.  The system of claim 2, wherein said work station initiates a session with an ALLOCATE command containing a transaction program name identifying a pre-initialized virtual machine for executing one of said specific set of services.

FIG. I

FIG. 2

EP 0 473 913 A2

FIG. 3